# EUROPEAN PATENT APPLICATION

(11) **EP 2 106 702 A1**
(43) Date of publication of application: **07.10.2009**
(21) Application number: 09157190.1
(22) Date of filing: 02.04.2009
(51) Int. Cl.: A22C 11/02

(54) **Minced meat product and a method for producing it**

(30) Priority: 04.04.2008 HU 0800213
(71) Applicant: Sylvain Husipari KFT, hrsz. 1623/5 6070 Izsák (HU)
(72) Inventor: Thiery, Sylvain Marcel Roger, H-6070, Izsák (HU)
(74) Representative: Kovacs, Gabor

(57) **Abstract**

The object of the invention is firstly a method for producing packaged and minced meat product, which method includes the following steps:
the meat is boned, cut to pieces, and the meat parts to be minced are selected,
the meat parts to be minced are cut into pieces having a size suitable for mincing, salt, and if required, other additives and spices are added and preliminarily mixed therewith,
the chopped meat is minced to particles sized as desired,
the minced meat product is homogenised,
the homogenised meat product is filled into a plastic tubular casing (50) while applying vacuum,
the plastic tubular casing (50) is pressed together at distances, and packs (56) are formed by closing both ends of the pressed part air-tightly by a pressing device (64), and overpressure is created in the packs (56).

Secondly, the object of the invention is a meat product containing prepared minced meat that is filled into an artificial tubular casing (50) under vacuum and is mixed with components, is seasoned and prepared for kitchen-use, where the artificial tubular casing (50) is closed with a known closing devices, such as clips.

## Description

### The field of the invention

The object of the invention is a method that can be used in the meat industry, whereby a packaged minced meat product with a relatively long shelf life can be produced. Furthermore, the object of the invention is a packaged meat product.

### The state of the art

The meat industry produces numerous minced meat products, which are filled into a plastic tubular casing and the tubular casing is sealed at regular segments, and if desired, by separating the filled tubular casing segments, separate packs containing the minced meat product are formed. These meat products are produced in such a manner that the meat and other components are minced, seasoned and homogenised if necessary, then are filled into a tubular casing. Before being packaged into tubular casings, the meat product is heat treated, and thereby the shelf life of the meat product is extended.

Packaged minced meat is also marketed in a known way, where the minced meat is placed on a tray and sealed air tightly with a foil.

None of the known methods satisfy the need for it being suitable to be treated as fresh minced meat while having appropriate shelf life.

It has been recognised that with a few exceptions only, dishes made by using minced meat are generally not made from pure minced meat. In the course of the preparation of the dish, the minced meat is usually salted, seasoned and spiced with other auxiliary materials such as onion, garlic, pepper, etc.

It has been realised that if a part of these actions are carried out before packaging and the meat product so produced is filled into a plastic casing by applying vacuum at the same time, the shelf life of the meat product will be longer than that of pure minced meat, while it can be used in the same manner for making dishes as minced meat that has not been pre-treated at all and is free of any additives or spices.

The method developed on the basis of this realisation includes the following steps:
- The meat is boned, cut to pieces and the parts to be minced are selected,
- the meat parts to be minced are chopped into pieces having a size suitable for mincing, and salt, other additive materials (if necessary) and spices are added to such pieces before mixing them together,
- the chopped meat is minced to pieces having the desired size,
- the minced meat product is homogenised,
- the homogenised meat product is filled into a plastic tubular casing while applying vacuum,
- the plastic tubular casing is pressed together at distances to form segments, and by air-tightly sealing both ends of the pressed segment, packs are formed and overpressure is created in the packs.

As a result, segments of a tubular casing filled with the meat product are obtained, which segments are joined to one another at the pressed parts of the tubular casing. If desired, by making cuts within the pressed parts, separate packs can be formed, which contain the required amount of the minced meat product.

It is an important element of the invention that by filling the prepared minced meat product to the working area preceding the filling system, closing the working area air-tightly and pumping the air out of it, a vacuum environment is created to help in the homogenisation of the meat product and in excluding air to prevent it from getting into the meat product during mincing.

It is a very important characteristic of the invention that the meat is cooled throughout the entire processing process in order to maintain its shelf life. Its temperature should be kept below +4±0.5 °C even during the individual processing steps, e.g. mincing, mixing, homogenisation. In order to achieve this, the temperature of the working area should be maintained at 10 °C, preferably at +4±0.5 °C. If necessary, cooling is applied during processing, for instance by using pre-cooled or continuously cooled (containing, processing) tools.

In one version of the method according to the invention a heat treatment can be applied on the packs; and this depends primarily on the packaging material used. As the most important element in the method is to preserve the freshness of the minced meat, shelf life is primarily ensured by carrying out homogenisation and the packaging method in a vacuum environment.

If the packaging material is a simple tubular casing, then after filling, and having sealed it air-tightly by means of a pressing device (either a clip or a tie), the multipackaging of the finished product can be carried out in a cooled environment of +4±0.5 °C temperature.

If the packaging material used is a heat shrinkable foil, then after filling, and having sealed it air-tightly by means of a clamping device (either a clip or a tie), it is exposed to a short and intensive heat treatment in order to facilitate the shrinking of the packaging material. Heat treatment can be carried out both by heat treating the tubular casing segments separated air-tightly from one another but still connected to each other and by heat treating the separated packs, however, it should be made sure that the heat treatment may have an impact only on the shrinking of the packaging material except of a negligibly small part of the minced meat in the tubular casing may receive heat treatment otherwise its freshness would be taken away, the preservation of which is the essential goal.

The heat treatment, if it is necessary, lasts for 1-10 seconds, preferably for 2-5 seconds at a temperature of 60-90 °C, preferably at 70-85 °C, depending on the quality and thickness of the packaging material; at a temperature of 90 °C it lasts for no longer than 4 seconds. However, care should be taken to observe what has been mentioned above, to avoid the exposure of the fresh minced meat to the effect of the heat during the heat treatment of the packaging material.

Heat treatment is preferably carried out by submerging into warm water. However, heat treatment can be given by on-blowing hot steam or air of e.g. 110 °C. In this regard, it should be mentioned that when choosing the parameters of the heat treatment (medium, temperature, duration and other parameters) it should be ensured that the inside of the packs do not warm up to such an extent that results in the minced meat product losing its raw character.

The heat effect on the packaging material partially stabilises the shape of the packs by the shrinking of the packaging material, and at the same time it realises a limited extent of sterilisation; moreover, by the shrinking of the packaging material, the minced meat filled into the tubular casing in a vacuum environment is pressed further, eliminating the chance of air remaining in the tubular casing.

After the heat treatment, the individual packs must be cooled back immediately, for instance by cooling, allowing it to stand in cooled water, preferably having a temperature of +2±0.5 °C. By this procedure, the heat effect resulting in a negative change of the texture of the fresh meat can be avoided.

These and other advantages and benefits can be learned from the detailed specification of the invention.

Towards the easier understanding and simpler application of the invention the invention will explained in the following with reference to an example and by referring to the drawings attached only for the purpose of demonstration and not for limitation, where
Figure 1 is a symbolic outline of the equipment for the application of the invention, and
Figure 2 is a more detailed outline of the filling station of the equipment according to Figure 1.

In the course of the realisation of the method according to the invention, 11 pig half-carcasses conveyed by e.g. a 10 conveyor chain are forwarded to a 12 cutting station, where the 11 pig half-carcass is opened, boned, cut to pieces, and after cutting up, the meat parts to used for the method according to the invention are separated and cleaned.

The cut meat is then pre-chopped at a 14 chopping station to pieces of a size suitable for mincing later. These pre-chopped meat parts are forwarded to a 18 pre-mixing station by e.g. a 16 conveyor belt or just simply in boxes, which 18 pre-mixing station is basically a mixing machine where the pre-chopped meat is poured in, the required amount of spices, salt in particular, are added, and mixed together with the meat.

After this, the pre-chopped meat with the spices and additives added is forwarded to a 20 mincer, then the minced meat, which is partially homogenised by the mincing, is forwarded to an 22 after-mixer, which is basically a mixer similar to the previous one and carries out the homogenisation of the meat product.

Subsequently to after-mixing, the homogenised meat product is forwarded to a 30 filling station, where it is filled into a 50 tubular casing made of plastic, and the 56 packs containing the minced meat product stuffed into the 50 tubular casing are stored in boxes.

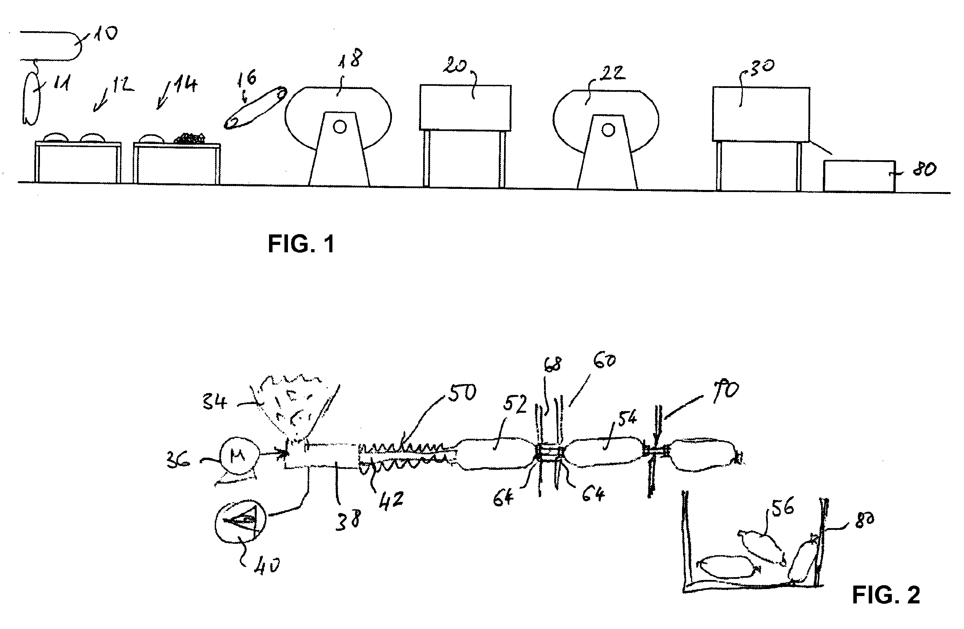

The important steps of the method according to the invention take place at the 30 filling station, which is shown in detail in Figure 2. The minced, homogenised meat product is poured from the 22 after-mixer to the 34 feed opening of the 32 sausage stuffer machine, where the 32 sausage stuffer machine is basically a traditional solution and includes a 38 stuffer screw and a 42 stuffer tube connected thereto, a 36 drive mechanism driving the 38 filling spiral and a 40 vacuum pump, which is connected to the outer surface of the 42 stuffer tube though the appropriate ducts. Before starting the filling, a tubular casing having the required length is pulled onto the 42 stuffer tube, then the 40 vacuum pump is turned on and the 36 drive mechanism is started. This is when the 38 filling spiral pushes the minced meat product from the 34 feed opening to the 50 tubular casing through the 42 stuffer tube while the vacuum provided by the 40 vacuum pump presses the 50 tubular casing onto the 42 stuffer tube to a certain extent and thereby prevents air bubbles from remaining in the 50 tubular casing, and as a result, a 52 filled tubular casing free of bubbles is formed. The 52 filled tubular casing is then directed to a 60 closing device, which presses the 52 filled tubular casing at the required distances by means of a 68 pressing block, and which 60 closing device presses a 64 pressing device (clip) on both ends of the pressed segment, and this results in basically air-tightly sealed 54 tubular casing segments. The 54 tubular casing segments are forwarded to a 70 parting device either directly or after heat treatment, which 70 parting device parts the 54 tubular casing segments from the next 54 tubular casing segments either one by one or in groups, and thereby individual 56 packs or 56 packs that are joined together in groups are created, which are collected in a 80 collecting box. If the heat treatment is carried out after parting, then these 56 packs are placed into the space where the heat treatment is carried out, for example they are submerged into hot water, e.g. in a perforated crate.

One of the important characteristics of the invention is that the minced meat product in the 56 pack is under overpressure compared to the environment. This overpressure is usually created by itself due to the fact that the 68 pressing block of the 60 closing device would decrease the cubic capacity of the 54 tubular casing segments but as a consequence of the overpressure so created, the 50 tubular casing expands due to its flexibility. After mounting the 64 pressing devices, the 50 tubular casing remains in an expanded state, and the flexibility of the material of the 50 tubular casing maintains the overpressure.

The invention is hereinafter explained through an example.

### Example

*1. Name:* Opening-boning
   a. *Process:* Opening of fresh meat of unskinned pig half-carcasses in a working area having a temperature below 10 °C, preferably cca. +4±0.5 °C. As a result of the process, fresh opened meat parts are formed.
   b. *Input material:* pig half-carcasses from the pig half-carcasses cooler
   c. *Output material:* fresh, cleaned parts in boxes
*2. Name:* Pre-chopping
   a. *Process:* From the incoming fresh parts, those specified in the production instruction are pre-chopped in a working area having a temperature below 10 °C, preferably cca. +4±0.5 °C.
   b. *Input material:* fresh, cleaned parts in boxes
   c. *Output material:* pre-chopped meat in carts
*3. Name:* Spicing, adding components, mixing
   a. *Process:* Various components specified in the recipes are added to the pre-chopped meat in a working area having a temperature below 10 °C, preferably cca. +4±0.5 °C, then these are mixed together in the course of a pre-mixing phase.
   b. *Input material:* pre-chopped meat in carts
   c. *Output material:* seasoned, spiced pre-chopped meat mixed with components
*4. Name:* Mincing
   a. *Process:* The pre-chopped meat constitutes a compact massive mixture after having been minced in a working area having a temperature below 10 °C, preferably cca. +4±0.5 °C.
   b. *Input material:* seasoned, spiced pre-chopped meat mixed with components
   c. *Output material:* seasoned, spiced minced meat mixed with components, that is prepared meat
*5. Name:* After-mixing
   a. *Process:* Following the mincing, the prepared meat is after-mixed so that the added spices and other components can disperse even more homogeneously.
   b. *Input material:* seasoned, spiced minced meat mixed with components, that is prepared meat
   c. *Output material:* prepared meat mixed to become homogenous
*6. Name:* Filling
   a. *Process:* In a working area having a temperature below 10 °C, preferably cca. +4±0.5 °C, where a vacuum environment is created after loading the prepared meat, the prepared meat is at first filled into artificial casing by a machine connected to the working area and provided with vacuum filling technology, then equalized and its ends are closed air-tightly with a clip. The necessary information is applied thereon after this.
   b. *Input material:* prepared meat mixed to become homogenous
   c. *Output material:* prepared meat filled into artificial casing under vacuum, where the artificial casing may be traditional or having vacuum shrinkable properties, closed by clips at its ends, and may have a cylindrical or any other shape.

Two recipes are provided the following for the composition of the meat product that can be packaged by the solution according to the invention.
Recipe "A":
   boned, cut pig meat containing the selected parts of the meat, and calculated for the mass of the meat:
      0.3 mass% salt, and
      0.5 mass% beef blood.
Recipe "B":
   boned, cut pig meat containing the selected parts of the meat, and calculated for the mass of the meat:
      1 mass% salt, and
      0.5 mass% beef blood
      5% chopped onion
      0.5 mass% garlic pulp
      0.5 mass% spice mix containing pepper, paprika, etc.

Of course, the above recipes are only initiative in nature, which can be changed subject to the final composition, recipe of the food to be prepared from the minced meat. Obviously, only such materials having impeccable quality may be used for the carefully treated meat product that do not influence shelf life disadvantageously.

The packaging technology examinations and trials conducted on traditional vacuum packaging for the purposes of comparison have been successful respecting both the 14-day and the 21-day results based on organoleptic examination, which means that the shelf life of the minced meat product packaged with the method according to the invention has substantially extended compared to minced meat packaged in the traditional manner.

## Claims

1. Method for producing a packaged and minced meat product **characterised in that** the method includes the following steps:
- the meat is boned, cut to pieces, and the meat parts to be minced are selected,
- the meat parts to be minced are cut into pieces having a size suitable for mincing, salt, and if required other additives and spices are added and preliminarily mixed therewith;
- the chopped meat is minced to particles sized as desired,
- the minced meat product is homogenised,
- the homogenised meat product is filled into a plastic tubular casing while applying vacuum,
- the plastic tubular casing is pressed together at distances, and packs are formed by closing both ends of the pressed part air-tightly by a pressing device, and overpressure is created in the packs.

2. The method according to claim 1 **characterised in that** the packs are exposed to a minimal heat treatment depending on the quality and thickness of the packaging material resulting in a limited extent of sterilisation, and the parameters of the heat treatment (medium, temperature, duration and other parameters) are selected in a way that the inside of the packs do not warm up during the heat treatment to such an extent that results in the minced meat product losing its raw character.

3. The method according to claim 2 **characterised in that** the packs are heat treated at a temperature of 60-90 °C, preferably at 70-85 °C depending on the quality and thickness of the packaging material for 1-10 seconds, preferably for 2-5 seconds, and at a temperature of 90 °C, for no longer than 4 seconds, making sure that the fresh minced meat is not exposed to any heat effect that would change its consistency and/or its condition.

4. The method according to claim 2 **characterised in that** the heat treatment is carried out by submerging into warm water.

5. The method according to claim 2 **characterised in that** the heat treatment is carried out by on-blowing a hot gaseous phase medium, e.g. steam or air of 110 °C.

6. Meat product containing sealed minced meat closed into a packaging material **characterised in that** the packaging material is an artificial casing and that the minced meat product filled into the artificial casing under vacuum is a prepared minced meat that is mixed with other components, is seasoned and prepared for kitchen-use, and the artificial casing is closed with a known closing devices, such as a clips.

7. The meat product according to claim 5 **characterised in that** the artificial casing is made of a plastic that has a quality suitable for use in the food industry and has vacuum shrinkable properties.
